# EUROPEAN PATENT APPLICATION

(11) **EP 1 994 865 A1**
(43) Date of publication of application: **26.11.2008**
(21) Application number: 08464009.3
(22) Date of filing: 23.05.2008
(51) Int. Cl.: A47J 37/04, A47J 37/06, A47J 37/07

(54) **Portable rotisserie grill and cooking method**

(30) Priority: 23.05.2007 RO 200700341
(71) Applicant: Stihi, Doru, Pittstown NJ 08867 (US)
(72) Inventor: Stihi, Doru, Pittstown NJ 08867 (US)
(74) Representative: Popescu, Livia

(57) **Abstract**

The present invention relates to a portable rotisserie grill that comprising a lower frame **(1)** with swivel casters **(2)** with brakes, an upper frame **(19)** supporting the fire bed (18) in the form of a metallic tray, a rotisserie spit **(30)** with food engaging structure that can accommodate a pig, lamb or turkey, two frames **(25** and **26)** attached to lower frame **(1)** by thumb-screws **(27),** two bearing blocks **(28** and **29)** mounted atop frames **(25** and **26)** that hold rotisserie spit **(30).** A heat reflective vault **(43)** reflects the heat back down toward spit **(30)** and a temperature gauge **(44)** monitors the temperature of fire bed **(18).** The cooking method comprising following steps of placing a whole pig, lamb or turkey on rotisserie spit **(30),** comparing the temperature in the vicinity of said meat to predetermined standard and regularly adjusting the fire bed **(18)** vertically to bring the temperature in the vicinity of said meat toward the predetermined standard.

## Description

The present invention relates to a portable rotisserie grill and cooking method that is used particularly in gastronomy, for cooking whole meat at an adjustable cooking temperature, leaving the cooking food easily accessible.

In U.S. Patent 5,996,572 the charcoal tray can be vertically adjusted by a threaded crankshaft relative to the grill or to the rotisserie shaft for temperature adjustment. The main disadvantage is the difficulty to operate the crankshaft for cooking temperature adjustment. More over, the cooking food is covered entirely thus the cooking stage can be assessed only by opening the cover of the equipment.

The advantage of the present invention is to provide a cooking apparatus that is portable, user-friendly able to cook a whole meat at adjustable temperature. Yet another advantage is reducing the charcoal consumption by using a heat reflective vault that reflects the heat back to the food on the spit, thereby increasing the cooking efficiency while leaving the cooking food easily accessible.

The portable rotisserie grill has a lower frame supported on swivel casters with brakes and an upper frame that supports a metallic tray housing the fire bed. A rotisserie spit featuring a food engaging structure can be mounted over the fire bed. The rotisserie spit is supported by two vertical legs attached to the lower frame. A heat reflective vault can be mounted over the rotisserie spit to reflect radiant heat back to the food. The cooking temperature is monitored by a thermometer mounted centrally on the edge of the heat reflective vault. A drive mechanism vertically adjusts the position of the fire bed to regulate the amount of heat delivered to the food on the rotisserie spit. The drive mechanism can be a scissor lift in the form of a scissors lift. The scissors lift can be operated manually by a crank handle or automatically by a motor driven lead screw and nut system.

In accordance with the present invention, a cooking method is provided employing a fire bed, a heat reflective vault, and a rotisserie spit with food engaging structure. The method includes the step of vertically adjusting the fire bed to adjust heat flowing toward the rotisserie spit. The method also includes the step of reflecting radiant heat over the rotisserie spit back down toward the rotisserie spit without laterally and closing the rotisserie spit.

The method includes the following steps: placing a whole adult pig, lamb or turkey on the rotisserie spit; comparing the temperature in the vicinity of said meat to a predetermined standard; regularly adjusting the fire bed vertically to bring the temperature in the vicinity of said meat toward the predetermined standard; when done cooking, collapsing the rotisserie spit, fire bed and reflector together before storing them.

By employing the present disclosed apparatus and cooking method the following advantages are achieved:
- sturdy design with low overall dimensions and weight, for easy storage and portability;
- use of non corrosive materials that provides reliability and durability;
- low maintenance costs;
- increased cooking efficiency by employing a heat reflective vault for reflecting radiant heat back;
- minimum storage space.

The following is a detailed description of the present invention in conjunction with the accompanying drawings, wherein:
- fig. 1, is a perspective view of a cooking apparatus according to principles of the present invention;
- fig. 2, is a different perspective view of the cooking apparatus of fig.1 with a heat reflective vault installed;
- fig. 3, is a perspective view of the cooking apparatus of fig.1 partially disassembled, collapsed and packed for storage.

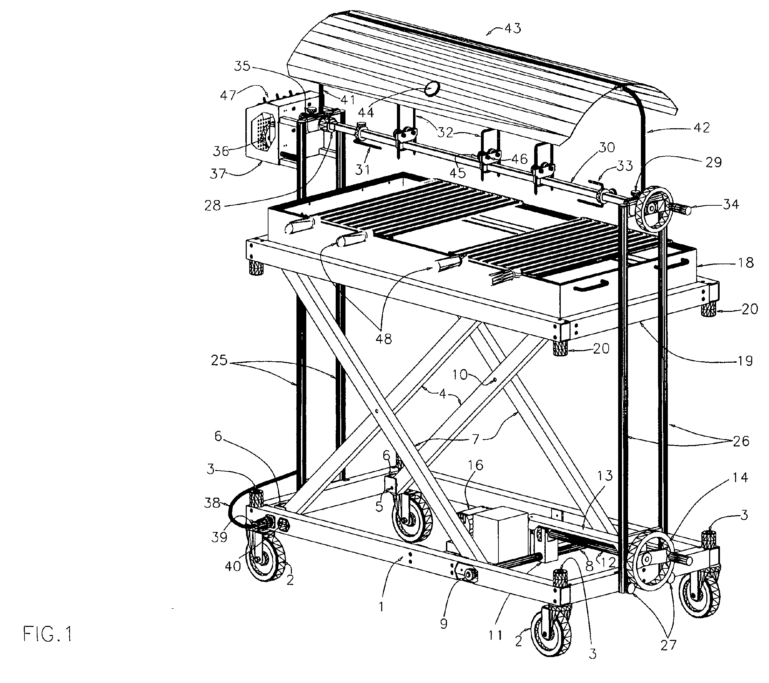

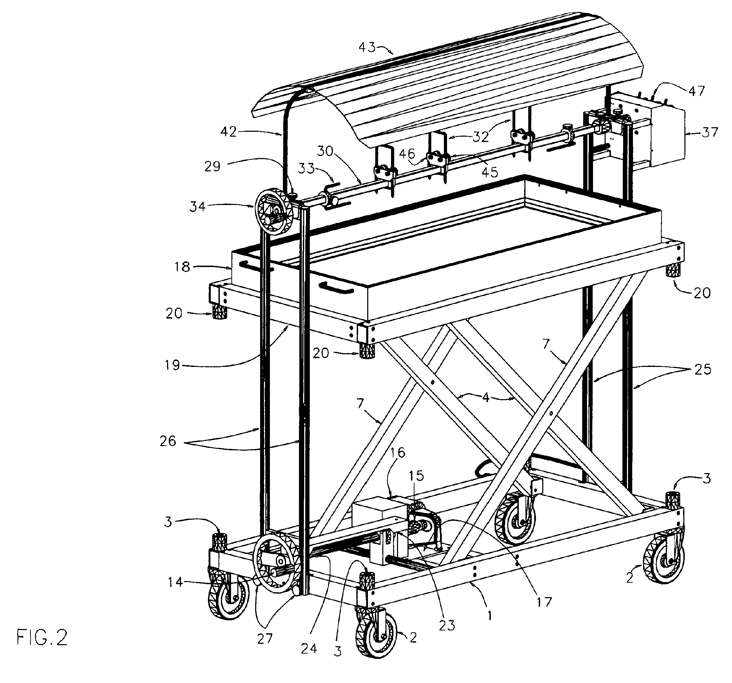

Referring to fig. 1 and 2, the illustrated cooking apparatus has a four sided open lower frame **1** made of rectangular shape irons with swivel casters **2** and upwardly directed bumpers **3** at each corner. The lower ends of a parallel pair of scissor arms **4** are pivotally attached to shaft **5** journaled in bosses **6,** which are mounted in two adjacent corners of frame **1.** A crossing pair of scissor arms **7** is pivotally attached to shaft **8,** which is journaled at either end in a pair of wheels **9** located inside the frame **1.** The scissor arms **4** and **7** are joined together with a pivot **10.**

The center of shaft **8** is journaled in nut **11,** which is threaded on lead screw **12,** which is rotatably mounted on the underside of bracket **13.** The outside end of the lead screw **12** is attached to crank wheel **14.** The inside end of the lead screw **12** is attached through splined connector **15** (fig. 2) to elevator motor **16,** which is supported on platform **17** of frame **1.**

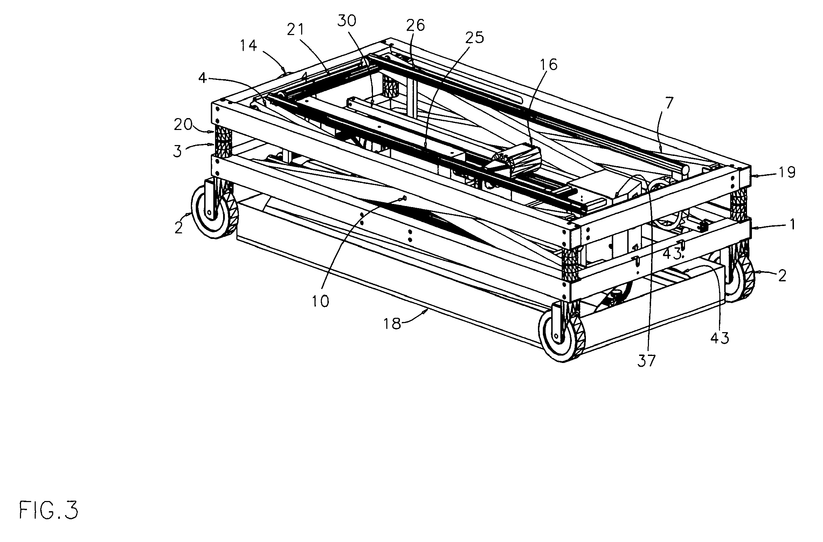

A fire bed **18** in the form of a metal tray designed to hold a charcoal fire rests inside and on upper frame **19.** In one embodiment the tray is 122 cm long and 61 cm wide, although these dimensions may be different in other embodiments. Upper frame **19** constructed in a manner similar to lower frame **1,** has downwardly directed bumpers **20,** and a shaft **21** (fig. 3) supported on wheels (not shown) similar to wheels **9** on frame **1.**

The upper ends of scissor arms **4** are pivotally attached to shaft **21.** The upper ends of scissor arms **7** are pivotally attached to shaft **22** (fig. 3) which is mounted in a manner similar to previously mentioned shaft **5.**

Accordingly, scissor arms **4** and **7** act as a scissor lift or drive mechanism for vertically adjusting the height of upper frame **19.** Specifically, elevator motor **16** can turn lead screw **12** to move nut **11** and shaft **8** longitudinally. Consequently, the spacing between the lower ends of arms **4** and **7** changes to change the angle between arms **4** and **7.** In response, the height frame **19** changes as shaft **21** moves in the same direction as shaft **8** to accommodate the motion of arms **4** and **7.**

Limit switches **23** and **24** (fig. 2) mounted at each end of lead screw **12** can stop motor **16** when nut **11** reaches one of the ends of the lead screw **12,** to stop elevator motor **16** to prevent over traveling of fire bed **18.**

In one embodiment upper frame **19** had a height that was adjustable from 25cm to 106 cm, although this range may be different in other embodiments.

Frames **25** and **26** have an inverted U shape and are attached to frame **1** by thumb-screws **27.** Bearing blocks **28** and **29** are mounted atop frames **25** and **26.** Bearings **28** and **29** have a hinged, clamshell construction allowing the bearing to hold or quickly release rotisserie spit **30.** Rotisserie spit **30** has a number of conventional skewers **31, 32** and **33** designed to hold food such as a whole adult pig weighting approx. 30 kg or more. In other embodiments the spit may be replaced with another food support such as a grill having a number of parallel, spaced metal bars.

A crank wheel **34** is attached to one end of spit **30,** the other end being attached through the splined connector **35** to spit motor **36** which is supported by box **37,** which is in turn supported by frame **25.** Box **37** contains a motor control, such as a commercially available motor speed controller designed to adjust the speed of motor **36.** The motor control has manual controls such knobs and switch handles for adjusting the speed and direction of motor **36** (and as will be described presently, the direction of motor **16).** In one embodiment there are four controls: two for the scissor lift **4, 7** and two for the spit **30.** In particular, the angular speed of the spit **30** may be regulated to a constant speed somewhere between 6 to 20 rpm, although other speed ranges are contemplated (e.g., between 10 to 12 rpm). The two controls for the scissor lift **4, 7** command raising and lowering of fire bed **18** and also control the speed of movement. The lift controllers operated in automated and/or manual mode.

Power is brought to box **37** through power cord **38** and connector **39** from junction box (not shown), which has a socket **40** for receiving a power supplying line (not shown). The power cord **38** is routed through the inside of frame **25** into the interior of box **37.**

Column **41** and column **42** are attached atop frame **25,** respectively **26.** Columns **41** and **42** support a heat reflective vault **43,** for example a cylindrical metal reflector that may be made of sheet aluminum or stainless steel. The heat reflective vault **43** has a concave underside.

In addition to heat reflective vault **43,** there is a heat reflective blanket (not shown) made of fiberglass attached to heat reflective vault **43.** The heat reflective blanket has the same purpose as heat reflective vault, namely to reflecting radiant heat back and increasing cooking efficiency.

A temperature gauge **44** centrally mounted along one edge of the heat reflective vault **43** can display the temperature of the fire bed **18.**

To facilitate an understanding of the principles associated with the foregoing apparatus, its operation will be briefly described. The cooking apparatus can be set up as shown in fig. 1 and the swivel casters **2** (with brakes) ensure excellent manoeuvrability. To begin, a user can fill fire bed **18** with charcoal or other combustible fuel and ignite it. The user can also release clamshell bearings **28** and **29** and than pull spit **30** out axially disconnecting it from splined connector **35.**

In the usual fashion, spit **30** can be inserted through a piece of meat such as a whole adult pig or lamb. The skewer **32** can be inserted radially through the pig carcass (and locked with the crosspieces **45** and **46)** while skewers **31** and **33** can be inserted into either end of the meat. Thereafter the spit **30** can be reconnected to splined connector **35** and placed in bearings **28** and **29,** which are then closed. Next the user can fasten heat reflective vault **43** with the columns **41** and **42** atop frames **25** and **26,** and attach the heat fiberglass blanket.

The user can check the cooking temperature by observing the reading on temperature gauge **44.** If the temperature is inappropriate, the height of fire bed **18** can be adjusted by turning crank wheel **14** to rotate lead screw **12** and move nut **11** axially. As previously mentioned, shaft **8** moves with nut **11** to change the separation between the lower ends of scissor arms **4** and **7,** thereby changing the elevation of frame **19** and fire bed **18.**

The user can continually turn crank wheel **34** to rotate the spit and the meat supported thereon. In some cases crank wheel **34** may be turned in angular increments every five minutes or so. In most cases, however, the user will operate controls **47** on control box **37** to start motor **36** and rotate spit **30.** These controls can be used to set the direction of rotation as well as setting the speed, somewhere in the range of perhaps 6-20 rpm.

The power for this process will be supplied by a power cord plugged into junction box, which will in turn transmit power through cable **38** to control box **37.** This power can be supplied by public utility or, for embodiments having appropriate power converters, from a storage battery, such as an automobile battery.

As the cooking proceeds the heat from fire bed **18** can change. The user may operate controls **47** to begin automatically adjusting the height of fire bed **18.**

The cooking method according to the present invention comprising following steps of:
- setting of a piece of meat such as an adult pig, lamb or turkey on the spit **30;**
- checking of temperature in the vicinity of said meat toward the predetermined standard;
- adjusting vertically the fire bed **18** to bring the temperature in the vicinity of said meat toward the predetermined standard;
- reflecting back the radiant heat toward the said meat installed on the spit **30** without blocking the front and the side view;
- collapsing the rotisserie grill when cooking is completed together with the fire bed and reflector before storage / packing.

As the meat on spit **30** cooks, heat from fire bed **18** or from the meat itself can radiate upwardly, but it will be reflected back toward the cooking meat by the heat reflective vault **43.** This greatly increases the efficiency of cooking. Also, heat reflective vault **43** does not fully enclose the meat on spit **30.** Therefore, the use can watch the cooking process to judge its progress or simply for the pleasure of watching. Moreover, since the cooking meat is accessible from the side, the user is able to baste the meat or make sample cuts to judge how well the meat is cooking.

Eventually, the meat on spit **30** will be done and the roasted meat can be served directly from spit **30.** In that case, the user will want to lower fire bed **18** to a lower position and place grates **48** above the fire bed **18.** The carved meat can be maintained warm on grates **48** to be served eventually. The user will then stop motors **36** and **16.** The heat reflective vault **43** can now be removed. In some cases spit **30** will be released from bearings **28** and **29** so the roasted pig can be carried to a carving or serving table. The meat on spit **30** can be removed by releasing skewers **31, 32** and **33.**

When the foregoing cooking apparatus is no longer needed the ashes in fire bed **18** can be discarded and fire bed **18** and spit **30** with its skewers **31, 32** and **33** can be cleaned. If necessary, the cooking apparatus can be moved to or near a storage or transport location where the breakdown and storage can be completed.

Using either crank wheel **14** or motor **16,** frame **19** will now be fully lowered, with bumpers **20** resting on bumpers **3** of frame **1.** Frames **25** and **26** can be disconnected from frame **1** by unscrewing thumb-screw **27,** which can later be rethreaded in to frame **1.**

The various dissembled components can be packed as shown in fig. 3. This compact packing allows the cooking apparatus to be stored or hoisted onto a transport (e.g., the trunk of an automobile). The fire bed **18** can be first filled with various components such as skewers **31, 32** and **33,** spit **30,** heat reflective vault **43** and heat blanket. The loaded fire bed **18** can then be slid under frame **1** between the swivel casters **2.**

When fully closed, the scissor lift **4, 7** and motors **16** and **36** (electrical or hydraulic) are hidden and protected inside the frames **1, 19.** They do not contribute to the overall height of the apparatus. The overall height is primarily determined by the thickness of frames **1, 19** and the swivel casters **2.** The resulting package may be about **30** cm tall and be easily stored in a garage or various other storage locations.

This sturdy design and the use of non-corrosive materials and self-lubricating bearings, provide reliability, durability and low maintenance.

It is appreciate that various modifications may be implemented with respect to the above described, preferred embodiment. Fore example, the temperature can be measured by a wireless thermometer inserted into the roasted meat. In some embodiments the rotisserie spit may be replaced with a conventional grill. The drive mechanism for adjusting the height of the fire box may employ hoisting cables or chains, hydraulic pistons, vertically screws, racks and pinions, etc. The size, shape, and thickness of the various components, as well as the materials used to build the components, can be selected to produce the desired strength, durability, temperature stability, styling, etc.

Obviously, many modifications and variations of the present invention are possible in light of the above teachings. It is therefore to be understood that within the scope of the appended claims, the invention may be practice otherwise than as specifically described.

## Claims

1. Portable rotisserie grill containing a rotisserie spit **(30)** and a fire bed **(18), characterized in that** comprising a:
- a lower frame **(1)** with swivel casters **(2)** with brakes,
- an upper frame **(19)** supporting the fire bed **(18)** in the form of a metallic tray,
- a rotisserie spit **(30)** with food engaging structure that can accommodate a pig, lamb or turkey,
- two frames **(25** and **26)** attached to lower frame **(1)** by thumb-screws **(27),**
- two bearing blocks **(28** and **29)** mounted atop frames **(25** and **26)** that hold rotisserie spit **(30);**
- two columns **(41** and **42)** mounted atop bearing **(28** and **29);**
- heat reflective vault **(43),** mounted on columns **(41** and **42),** that reflects the heat back down toward spit **(30);**
- a temperature gauge **(44)** mounted centrally along one edge of the heat reflective vault **(43)** that monitors the temperature of fire bed **(18);**
- a control box **(37)** that controls two motors **(16** and **36);**
- a scissor arms drive mechanism for vertically adjusting the position of fire bed **(18)** either manually, using a crank wheel **(14)** or automatically using the elevator motor **(16).**

2. Portable rotisserie grill according to claim 1 wherein said food support comprises:
- a rotisserie spit **(30)** mounted on bearings **(28, 29)** that has a splined connector **(35)** for locking or quickly disconnecting said rotisserie spit **(30)** from spit motor **(36);**
- a skewer **(32)** that can be inserted radially through the pig carcass and locked with the crosspieces **(45** and **46)** while other skewers **(31** and **33)** can be inserted into either end of the meat;
- a crank wheel **(34)** attached to one end of spit **(30)** whereas the opposite end of spit **(30)** is connecting through splined connector **(35)** to a spit motor **(36)** that rotates the meat;
- a speed controller that regulates the angular speed of spit motor **(36);**
- grates **(48)** that are placed over fire bed **(18)** to maintain the carved meat warm and ready to be served eventually.

3. Portable rotisserie grill according to claim 1 comprising a heat reflective vault (43), mounted over rotisserie spit **(30)** reflecting radiant heat back down toward said rotisserie spit without laterally enclosing said rotisserie spit.

4. Portable rotisserie grill according to claim 1 comprising:
- a scissor lift connected between upper and lower frames, said scissor lift having a pair of upper ends coupled to said upper frame and a pair of lower ends coupled to lower frame;
- a lead screw **(12)** coupled to elevator motor **(16)** and having a nut **(11)** that adjusts automatically the space between said scissor lift pairs of arms **(4, 7);**
- a crank handle **(11)** attached to opposite end of said lead screw **(12)** that adjusts manually the space between said scissor lift pairs of arms **(4, 7);**
- a pair of limit switches **(23, 24)** responsive to motion of said scissor lift mechanism and coupled to said elevator motor **(16)** for stopping it in order to prevent excessive travel of said fire bed **(18).**

5. Portable rotisserie grill according to claims 1 and 4 comprising a temperature gauge **(44)** responsive to heat from said fire bed **(18)** and coupled to said elevator motor for controlling elevation of said fire bed, said temperature gauge **(44)** being powered from external power source through socket **(40),** power connector **(39),** power cord **(38),** control box **(37).**

6. Portable rotisserie grill according to claim 1 wherein rotisserie spit **(30),** conventional skewers **(31, 32** and **33),** heat reflective vault **(43),** frames **(25, 26)** are stored inside metallic tray of fire bed **(18),** said metallic tray being stored under the collapsed frame of the cooking apparatus between the swivel casters **(2).**

7. Cooking method according to portable rotisserie grill to claims 1 through 6, **characterized in that**, comprising following steps of:
- placing a whole pig, lamb or turkey on rotisserie spit **(30);**
- comparing the temperature in the vicinity of said meat to predetermined standard;
- regularly adjusting the fire bed **(18)** vertically to bring the temperature in the vicinity of said meat toward the predetermined standard;
- reflecting back the radiant heat without laterally enclosing said rotisserie spit **(30),** and
- rollapsing the rotisserie spit **(30),** the fire bed **(18),** the heat reflective vault **(43)** together when cooking is done and before storing them.
